# EUROPEAN PATENT APPLICATION

(11) **EP 4 679 795 A1**
(43) Date of publication of application: **14.01.2026**
(21) Application number: 24766749.6
(22) Date of filing: 07.02.2024
(51) Int. Cl.: H04L 43/08, H04L 41/0631, H04L 43/12

(54) **ABNORMALITY DETECTION METHOD, ABNORMALITY DETECTION DEVICE, AND PROGRAM**

(30) Priority: 09.03.2023 JP 2023036449
(71) Applicant: Panasonic Intellectual Property Management Co., Ltd., Kadoma-shi, Osaka 571-0057 (JP)
(72) Inventor: HIRAISHI, Rikiya, Kadoma-shi, Osaka 571-0057 (JP); HAGA, Tomoyuki, Kadoma-shi, Osaka 571-0057 (JP); ODA, Tomohiro, Kadoma-shi, Osaka 571-0057 (JP); UJIIE, Yoshihiro, Kadoma-shi, Osaka 571-0057 (JP); YAMAMOTO, Masaya, Kadoma-shi, Osaka 571-0057 (JP); TSUTSUI, Tomoaki, Kadoma-shi, Osaka 571-0057 (JP)
(74) Representative: Grünecker Patent- und Rechtsanwälte PartG mbB
(86) International application number: PCT/JP2024/004008
(87) International publication number: WO 2024/185374

(57) **Abstract**

An anomaly detection method according to one aspect of the present disclosure is an anomaly detection method to be executed by an anomaly detection device communicable with a plurality of devices that are communicable with each other via a predetermined network, and includes: a first detection step of detecting an anomaly in first control information that flows in the predetermined network; and a second detection step of transmitting, to the plurality of devices, a first instruction for causing transmission of second control information, and detecting an anomaly in the second control information received, when the anomaly is detected in the first detection step, the second control information indicating content of control executed by, among the plurality of devices, a device that has transmitted the second control information.

## Description

### [Technical Field]

The present disclosure relates to anomaly detection methods, anomaly detection devices, and programs.

### [Background Art]

Conventionally, devices that detect anomalies in communication such as cyber attacks have been provided (e.g., see Patent Literature (PTL) 1).

The system disclosed in PTL 1 extracts an extracted feature from system log data using natural language processing, and identifies a cyber attack based on a system entropy measurement value calculated from the extracted feature.

### [Citation List]

### [Patent Literature]

[PTL 1] Japanese Unexamined Patent Application Publication No. 2019-145081

### [Summary of Invention]

### [Technical Problem]

For example, constantly receiving information such as a control log from each device in a network and detecting an anomaly make it easy to more surely detect an anomaly in the network. However, such a method requires a lot of resources such as the processing capacity of a processor and the capacity of a memory that are necessary for detecting an anomaly.

The present disclosure provides, for example, an anomaly detection method that makes it possible to accurately detect an anomaly in a network while reducing the amount of processing for detecting the anomaly.

### [Solution to Problem]

An anomaly detection method according to one aspect of the present disclosure is an anomaly detection method to be executed by an anomaly detection device communicable with a plurality of devices that are communicable with each other via a predetermined network, the anomaly detection method comprising: a first detection step of detecting an anomaly in first control information that flows in the predetermined network; and a second detection step of transmitting, to the plurality of devices, a first instruction for causing transmission of second control information, and detecting an anomaly in the second control information received, when the anomaly is detected in the first detection step, the second control information indicating content of control executed by, among the plurality of devices, a device that has transmitted the second control information.

An anomaly detection device according to one aspect of the present disclosure is an anomaly detection device communicable with a plurality of devices that are communicable with each other via a predetermined network, the anomaly detection device comprising: a first detector that detects an anomaly in first control information that flows in the predetermined network; and a second detector that transmits, to the plurality of devices, a first instruction for causing transmission of second control information, and detects an anomaly in the second control information received, when the first detector detects the anomaly, the second control information indicating content of control executed by, among the plurality of devices, a device that has transmitted the second control information.

A program according to one aspect of the present disclosure is a program for causing a computer to execute the anomaly detection method described above.

### [Advantageous Effects of Invention]

The present disclosure can provide, for example, an anomaly detection method that makes it possible to accurately detect an anomaly in a network while reducing the amount of processing for detecting the anomaly.

### [Brief Description of Drawings]

[FIG. 1]

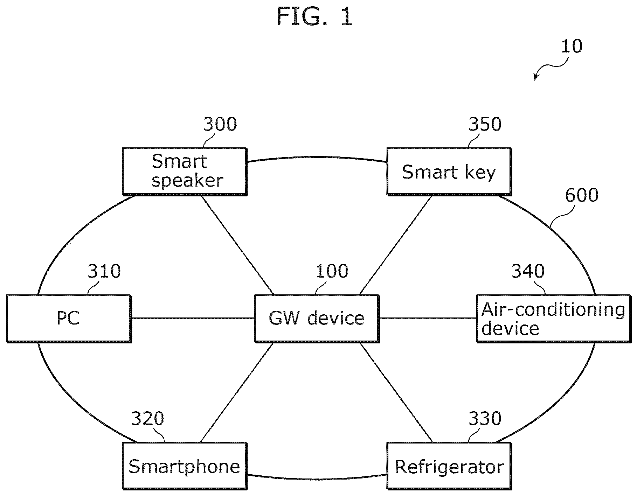

   FIG. 1 is a diagram for explaining a summary of a communication system according to an embodiment.
[FIG. 2]

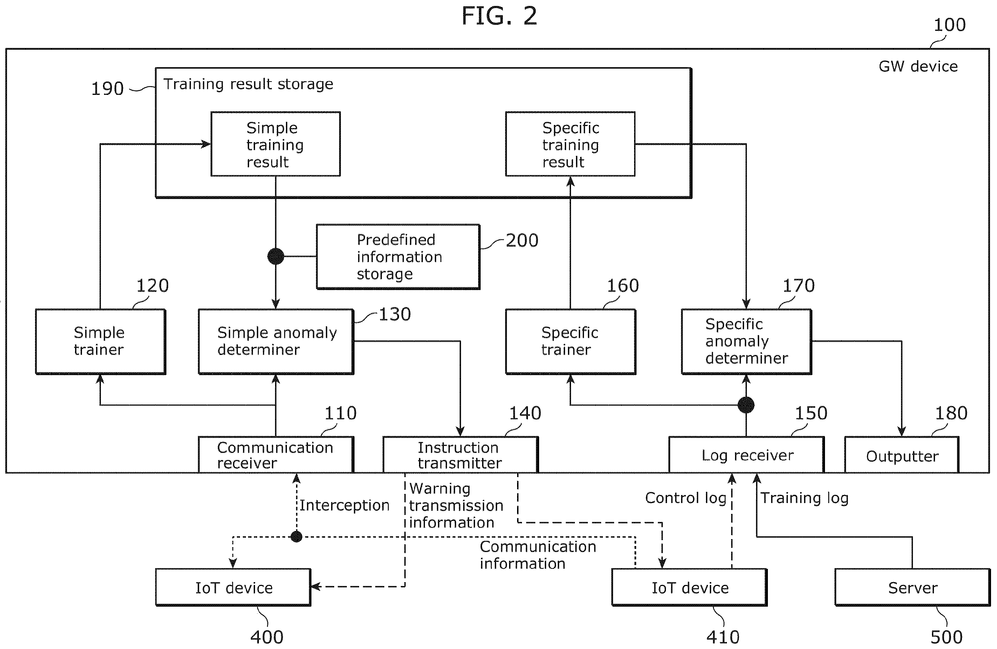

   FIG. 2 is a block diagram illustrating a functional configuration of a GW device according to the embodiment.
[FIG. 3]

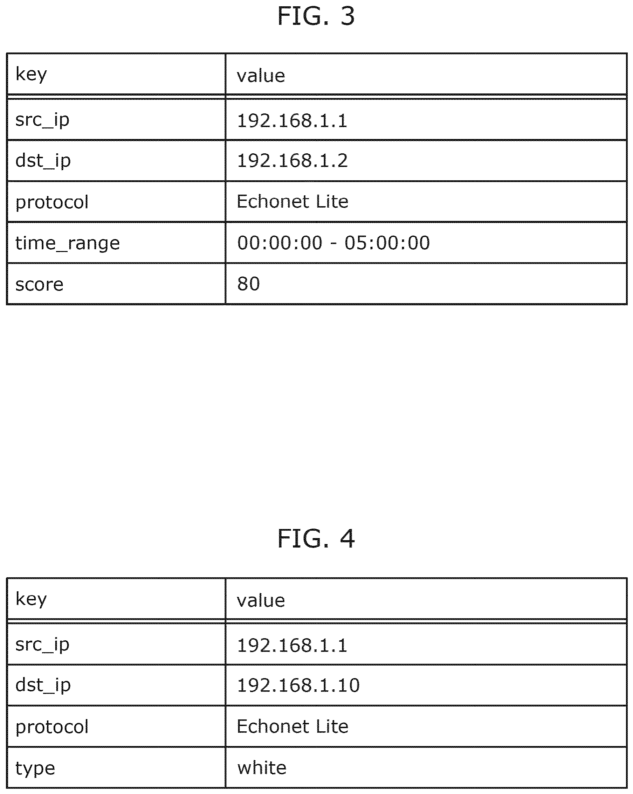

   FIG. 3 is a table showing an example of a simple training result according to the embodiment.
[FIG. 4]
   FIG. 4 is a table showing an example of predefined information according to the embodiment.
[FIG. 5]

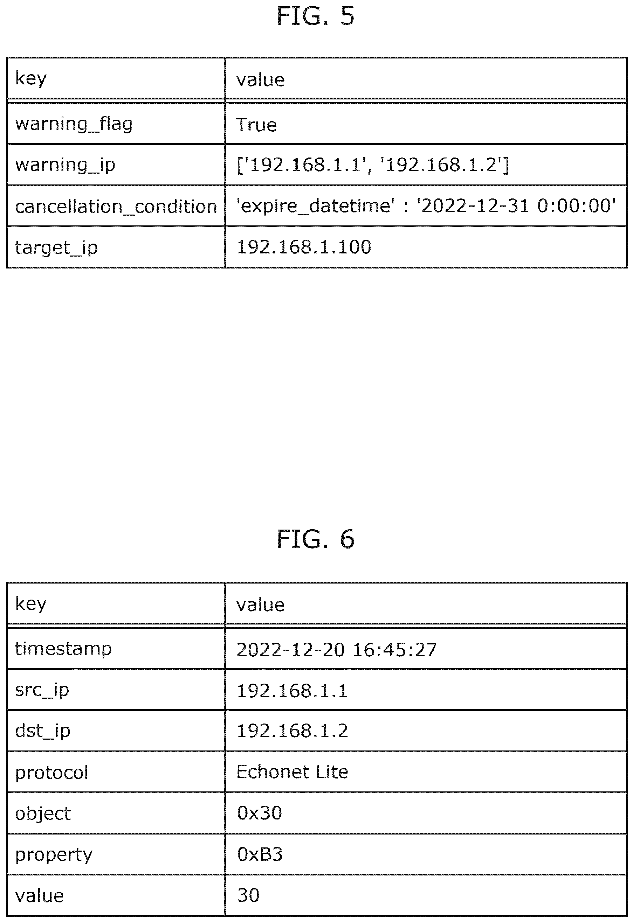

   FIG. 5 is a table showing an example of warning transmission information according to the embodiment.
[FIG. 6]
   FIG. 6 is a table showing an example of a control log according to the embodiment.
[FIG. 7]

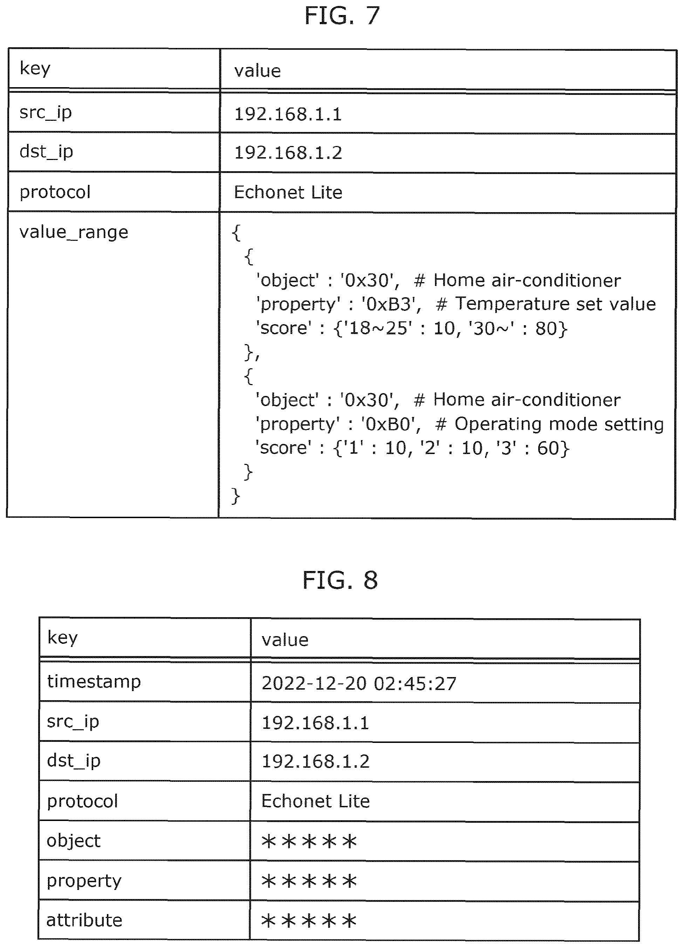

   FIG. 7 is a table showing an example of a specific training result according to the embodiment.
[FIG. 8]
   FIG. 8 is a table showing a specific example of communication information according to the embodiment.
[FIG. 9]

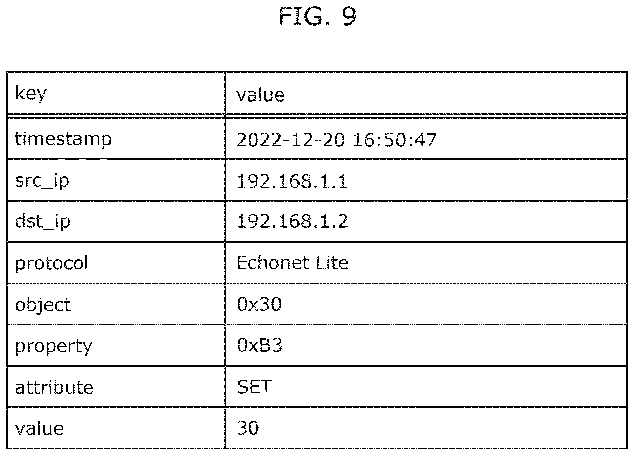

   FIG. 9 is a table showing a specific example of a control log according to the embodiment.
[FIG. 10]

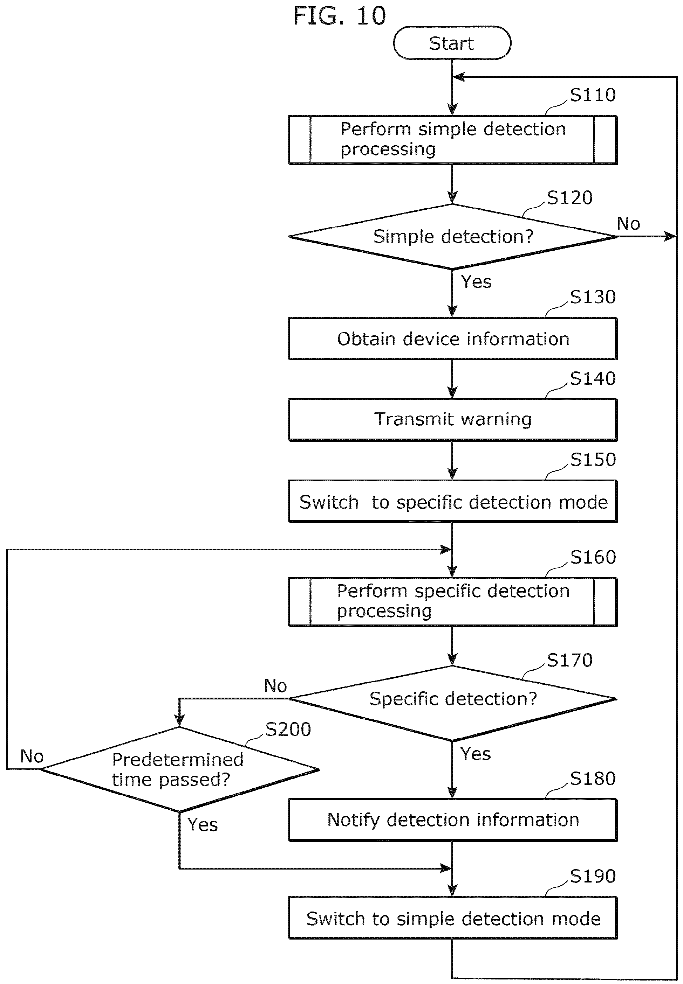

   FIG. 10 is a flow chart illustrating a procedure performed by the GW device according to the embodiment.
[FIG. 11]

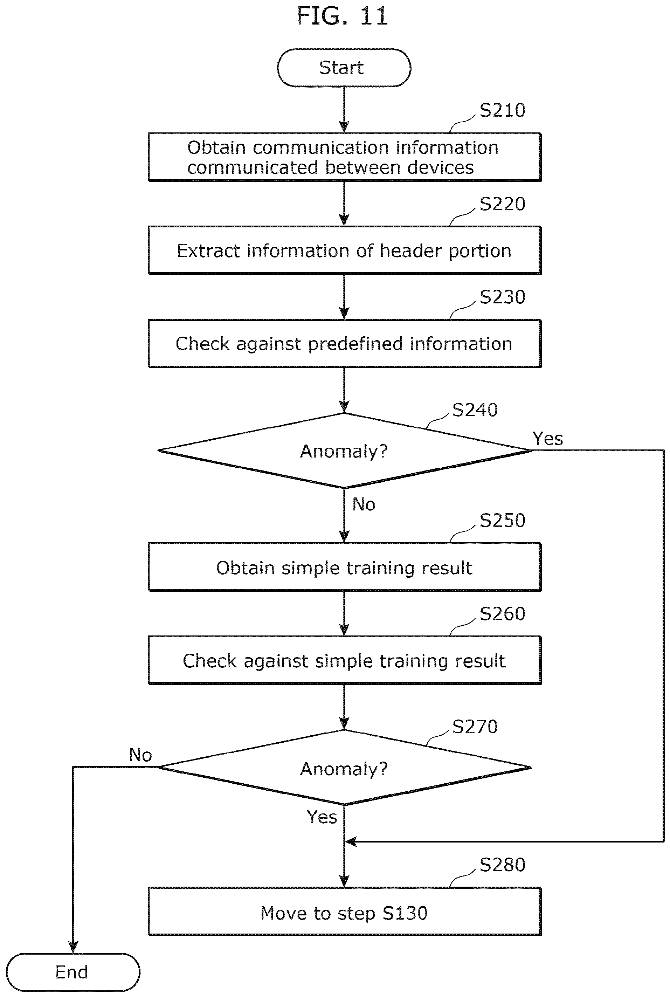

   FIG. 11 is a flow chart illustrating a procedure for performing simple detection processing according to the embodiment.
[FIG. 12]

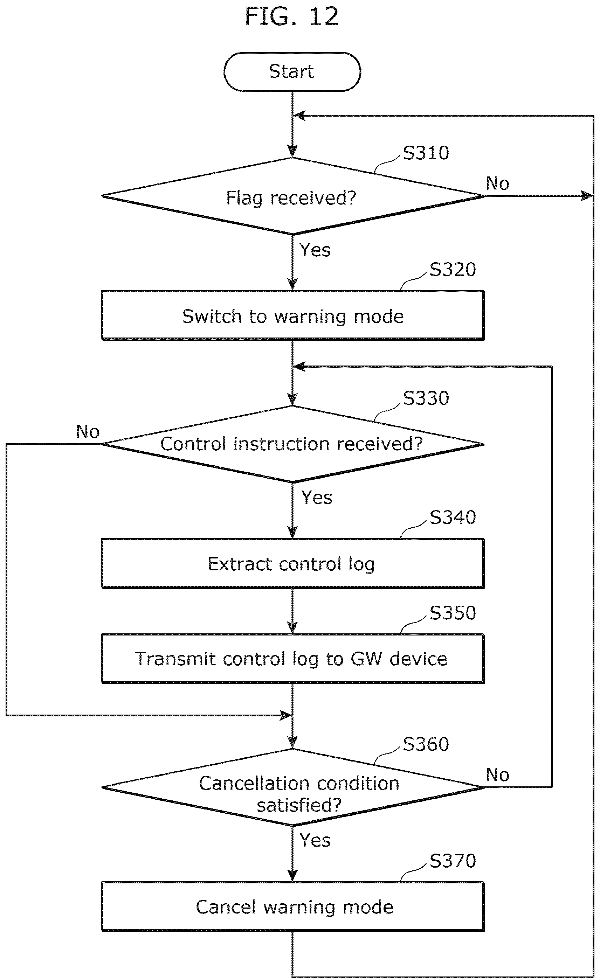

   FIG. 12 is a flow chart illustrating a procedure performed by an IoT device according to the embodiment.
[FIG. 13]

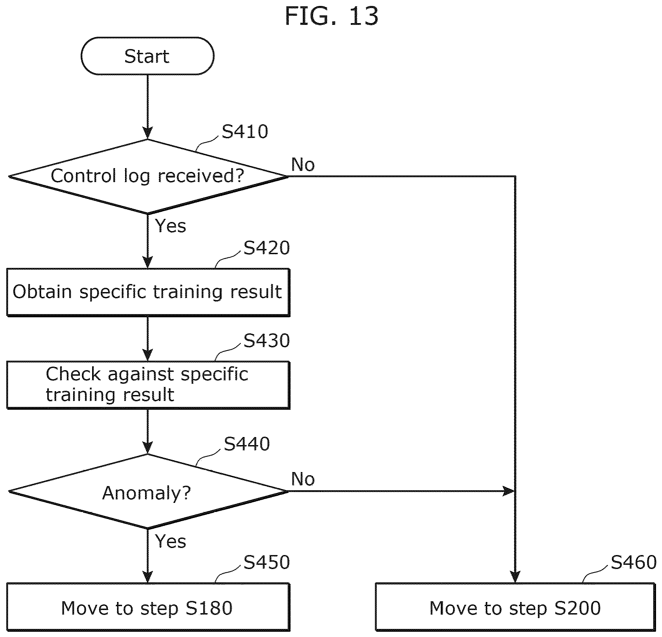

   FIG. 13 is a flow chart illustrating a procedure for performing specific detection processing according to the embodiment.
[FIG. 14]

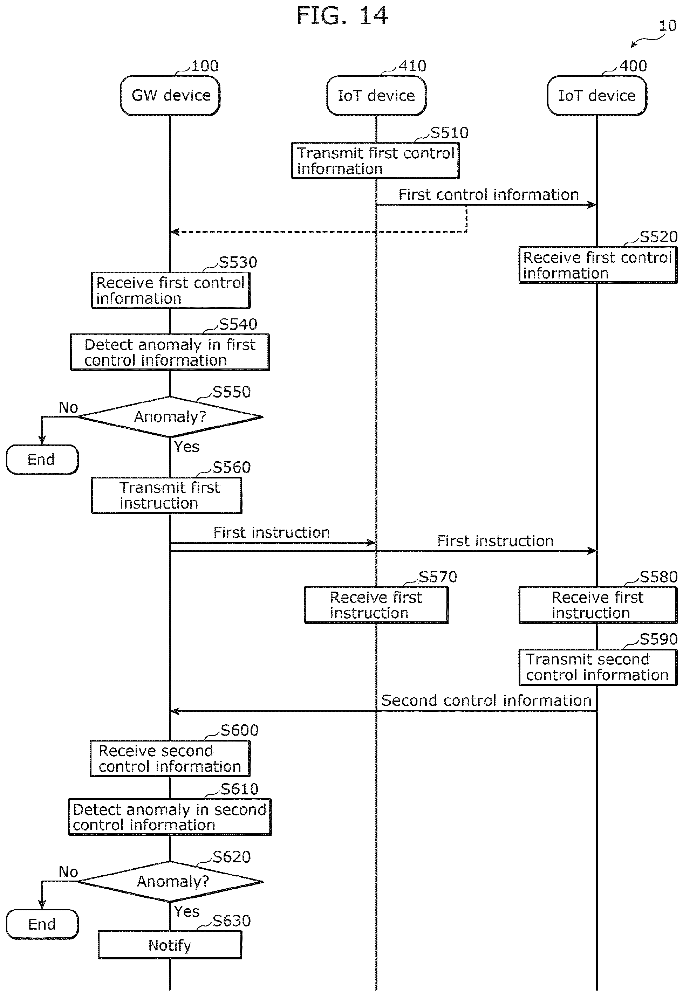

   FIG. 14 is a sequence diagram for illustrating a procedure performed by the communication system according to the embodiment.

### [Description of Embodiments]

Hereinafter, an embodiment is described in detail with reference to the Drawings.

It should be noted that the embodiment described below shows a generic or specific example. The numerical values, shapes, materials, constituent elements, the arrangement and connection of the constituent elements, steps, and the order of steps, etc. indicated in the following embodiment are mere examples and are not intended to limit the present disclosure. Moreover, among the constituent elements in the following embodiment, those not recited in the independent claims of the present disclosure are described as optional constituent elements. Furthermore, the respective figures are not necessarily precise illustrations. The same reference signs are assigned to substantially identical elements in the respective figures, and overlapping descriptions thereof may be omitted or simplified.

### [Embodiment]

### [Configuration]

FIG. 1 is a diagram for explaining a summary of communication system 10 according to the embodiment.

Communication system 10 includes a plurality of devices that are communicable with each other via a predetermined network (network 600). Communication system 10 includes, for example, as the plurality of devices, gateway (GW) device 100, smart speaker 300, personal computer (PC) 310, smartphone 320, refrigerator 330, air-conditioning device 340, and smart key 350.

Network 600 is a local network in, for example, a house. GW device 100, smart speaker 300, PC 310, smartphone 320, refrigerator 330, air-conditioning device 340, and smart key 350 are devices such as electric appliances that communicate with each other in closed network 600 such as a premises network. In the present embodiment, GW device 100, smart speaker 300, PC 310, smartphone 320, refrigerator 330, air-conditioning device 340, and smart key 350 communicate with each other using wireless communication such as Wi-Fi (registered trademark).

It should be noted that communication standards used for communication in communication system 10 may be determined in any manner.

Moreover, the number and types of a plurality of devices included in communication system 10 may be determined in any manner, and are not particularly limited.

FIG. 2 is a block diagram illustrating a functional configuration of GW device 100 according to the embodiment. It should be noted that GW device 100 is an example of an anomaly detection device. In addition, FIG. 2 shows, as Internet of Things (IoT) device 400 and IoT device 410, two of the devices included in communication system 10 such as smart speaker 300, PC 310, smartphone 320, refrigerator 330, air-conditioning device 340, and smart key 350.

GW device 100 is a device that detects anomalies. GW device 100 detects, for example, anomalies in the devices included in communication system 10 such as IoT device 400 and IoT device 410 (i.e., anomalies in network 600). Additionally, GW device 100 serves as a gateway. For example, GW device 100 is achieved by a communication interface for communicating with each of the devices (e.g., IoT devices 400 and 410) included in communication system 10, a non-volatile memory in which programs are stored, a volatile memory that is a temporary storage area for executing programs, an input-output port for transmitting and receiving signals, or a processor that executes programs. The communication interface is achieved by, for example, an antenna and a wireless communication circuit to enable wireless communication. GW device 100 may include a communication interface such as a connector to which a communication line for communicating with server 500 is connected. In addition, GW device 100 may be achieved by, for example, a connector to which a communication line for communicating with a notification device such as at least one of a display or an audio device is connected.

GW device 100 includes communication receiver 110, simple trainer 120, simple anomaly determiner 130, instruction transmitter 140, log receiver 150, specific trainer 160, specific anomaly determiner 170, outputter 180, training result storage 190, and predefined information storage 200.

Communication receiver 110 is a processing unit that receives information (communication information) communicated by IoT device 400 and IoT device 410 via the communication interface included in GW device 100. Specifically, communication receiver 110 obtains communication information by intercepting the communication information flowing in network 600. Communication information is an example of first control information.

Simple trainer 120 is a processing unit that trains simple anomaly determiner 130 to identify an anomaly in communication information. Simple trainer 120 trains, for example, using communication information, a learning model (first learning model) that learns time at which IoT devices 400 and 410 communicate, a communication partner (e.g., an internet protocol (IP) address of a device that is communicated) at the time, etc. For example, simple trainer 120 trains, using communication information as an input, the learning model to output the degree of anomaly in the communication information.

It should be noted that simple trainer 120 may perform training at any timing.

Although the first learning model is, for example, a machine learning model that uses a neural network (e.g., a convolutional neural network) such as deep learning, the first learning model may be another machine learning model.

FIG. 3 is a table showing an example of a simple training result according to the embodiment.

A simple training result includes, for example, src_ip, dst_ip, protocol, time_range, and score.

src_ip is an IP address of a device that is a transmission source of communication information.

dst_ip is an IP address of a device that is a transmission destination of the communication information.

protocol is communication standards used in communicating the communication information.

time_range is a period in which the communication information is transmitted and received.

score is the degree of anomaly in the communication information in the case of src_ip, dst_ip, protocol, and time_range shown in FIG. 3. For example, when score is high, simple anomaly determiner 130 identifies an anomaly. For example, a threshold value of score is predetermined in any manner. For example, when score is higher than or equal to the threshold value, communication information including src_ip, dst_ip, protocol, and time_range is determined as anomalous. On the other hand, for example, when score is less than the threshold value, the communication information including src_ip, dst_ip, protocol, and time_range is determined as normal.

Simple trainer 120 provides a simple training result that is information as shown in FIG. 3, based on communication information, and stores the simple training result provided into training result storage 190.

Simple anomaly determiner 130 is a processing unit that detects an anomaly in communication information flowing in network 600. Specifically, simple anomaly determiner 130 determines whether the communication information is anomalous. Simple anomaly determiner 130 is an example of a first detector.

For example, simple anomaly determiner 130 determines whether communication information is anomalous, using at least one of the above-described first learning model (i.e., a simple training result) or predefined information.

FIG. 4 is a table showing an example of predefined information according to the embodiment.

Predefined information is information used in detection of an anomaly performed by simple determiner 130, and is information predefined and stored into predefined information storage 200 by, for example, a user. For example, a communication partner may be predetermined depending on a device included in communication system 10. In view of this, for example, simple anomaly determiner 130 detects an anomaly using predefined information that indicates at least one of what is called a whitelist or a blacklist. The predefined information includes, for example, src_ip, dst_ip, protocol, and type.

type indicates, for example, whether to identify an anomaly in the case of src_ip, dst_ip, and protocol shown in FIG. 4. In the example shown in FIG. 4, since type is white, communication information communicated using src_ip, dst_ip, and protocol shown in FIG. 4 is determined as normal. On the other hand, for example, when type is black, communication information communicated using src_ip, dst_ip, and protocol associated with type is determined as anomalous.

Instruction transmitter 140 is a processing unit that transmits warning transmission information to IoT device 400 and IoT 410 via the communication interface included in GW device 100 when simple anomaly determiner 130 detects an anomaly, that is, when simple anomaly determiner 130 identifies an anomaly. Warning transmission information is an example of a first instruction.

It should be noted that instruction transmitter 140 may transmit warning transmission information only to a transmission source and a transmission destination of communication information in which an anomaly is detected among the plurality of devices included communication system 10. Moreover, instruction transmitter 140 may transmit the warning transmission information to devices included in communication system 10 other than the transmission source and the transmission destination of the communication information in which the anomaly is detected. Furthermore, instruction transmitter 140 may transmit the warning transmission information only to the transmission source of the communication information in which the anomaly is detected. Moreover, instruction transmitter 140 may transmit the warning transmission information only to the transmission destination of the communication information in which the anomaly is detected.

FIG. 5 is a table showing an example of warning transmission information according to the embodiment.

Warning transmission information is information for switching IoT device 400 and IoT device 410 to a warning mode. The warning mode is a mode for transmitting a control log indicating processing performed by a device to GW device 100. A control log is an example of second control information. For example, when a device that has switched to the warning mode is performing processing, based on information received from a transmission source and a transmission destination of communication information in which an anomaly is detected, the device transmits a control log indicating the processing being performed to GW device 100. Moreover, when the device that has switched to the warning mode receives information (e.g., information for causing the device that has switched to the warning mode to perform control) from the transmission source and the transmission destination of the communication information in which the anomaly is detected after the switch to the warning mode, the device performs processing without interruption from an availability viewpoint, and transmits, as a control log, information indicating the processing to GW device 100.

Warning transmission information includes, for example, warning_flag, warning_ip, cancellation_condition, and target_ip.

warning_flag is a flag for switching IoT device 400 and IoT device 410 to the warning mode. For example, when warning_flag is True, that is, when the flag is included in warning transmission information, IoT device 400 and IoT device 410 switch to the warning mode. A flag is an example of the first instruction.

warning_ip is information that indicates an IP address of each of a device that has received communication information in which simple anomaly determiner 130 has detected an anomaly and a device that has transmitted the communication information in which simple anomaly determiner 130 has detected the anomaly, among the plurality of devices included in communication system 10.

cancellation_condition is a cancellation instruction for canceling the warning mode. In other words, the cancellation instruction is information for causing IoT device 400 and IoT device 410 to stop transmitting control logs. A cancellation instruction is an example of a second instruction. For example, a cancellation instruction includes time information that indicates time at which transmission of a control log is to be stopped. When IoT device 400 and IoT device 410 are in the warning mode, IoT device 400 and IoT device 410 switch from the warning mode to a normal mode at the time and stop transmitting control logs.

The time may be determined in any manner. For example, instruction transmitter 140 sets time after a predetermined time has passed since simple anomaly determiner 130 detected an anomaly as the time. The predetermined time may be determined in any manner.

target_ip is an IP address of a transmission destination of warning transmission information.

As stated above, for example, when simple anomaly determiner 130 detects an anomaly, instruction transmitter 140 transmits, to the plurality of devices included in communication system 10, a flag for causing transmission of a control log indicating content of control executed by, among the plurality of devices, a device that has transmitted the control log. Moreover, for example, when simple anomaly determiner 130 detects an anomaly, instruction transmitter 140 transmits the flag to each of a device (first device) that has received communication information in which simple anomaly determiner 130 has detected the anomaly, and a device (second device) that has transmitted the communication information in which simple anomaly determiner 130 has detected the anomaly, among devices included in communication system 10. Furthermore, for example, instruction transmitter 140 transmits, to each of the first device and the second device, a cancellation instruction for causing transmission of a control log to stop. In the present embodiment, the flag and the cancellation instruction are included in warning transmission information.

It should be noted that a cancellation instruction may be transmitted to, for example, devices (e.g., the above-described first device and second device) that are caused to switch to the warning mode after a predetermined time has passed since simple anomaly determiner 130 detected an anomaly.

Log receiver 150 is a processing unit that receives control logs from devices (in this example, IoT device 400 and IoT device 410) that have switched to the warning mode via the communication interface included in GW device 100.

FIG. 6 is a table showing an example of a control log according to the embodiment. The control log is, for example, information transmitted as communication information from IoT device 410 to IoT device 400 to cause IoT device 400 to perform control, and is information stored as a control log in IoT device 400.

A control log includes, for example, timestamp, src_ip, dst_ip, protocol, object, property, and value.

timestamp is information that indicates a date and time on which communication information including content of control (control instruction) indicated by a control log is transmitted.

object is information that indicates a type of a device. object indicates a type of a device such as a refrigerator, a washing machine, or an air-conditioning device. It should be noted that in the example shown in FIG. 6, a type of a device is indicated by, for example, a numerical value such as 0x30.

property is information that indicates content of control. property indicates, for example, content of control such as temperature setting or humidity setting. It should be noted that in the example shown in FIG. 6, content of control is indicated by, for example, a numerical value such as 0xB3.

value is information that indicates a value (control value) for controlling content of control indicated by property. value indicates, for example, a numerical value such as 30.

For example, when IoT device 400 receives a control log (communication information indicating a control instruction) as shown in FIG. 6 from IoT device 410, IoT device 400 performs control as indicated by the control log. For example, in the case where IoT device 400 is an air-conditioning device, when object, property, and value included in the communication information received indicate air-conditioning device, temperature set value, and 30, respectively, IoT device 400 performs air-conditioning control for reaching a temperature of 30°C.

timestamp, src_ip, dst_ip, and protocol are an example of first information. The first information is, for example, information of a header portion included in communication information (a communication packet including the communication information). For example, first information included in communication information is information that is unencrypted. In other words, the first information is information that is unencrypted in communication between IoT device 400 and IoT device 410.

Moreover, object, property, and value are an example of second information. For example, second information included in communication information is encrypted. In contrast, for example, second information included in a control log transmitted from at least one of IoT device 400 or IoT device 410 to GW device 100 is not encrypted.

It should be noted that the second information included in the control log transmitted from at least one of IoT device 400 or IoT device 410 to GW device 100 may be encrypted. In this case, GW device 100 may store an encryption key for decrypting the second information that is encrypted.

Specific trainer 160 is a processing unit that trains specific anomaly determiner 170 to identify an anomaly in a control log. Specific trainer 160 trains, for example, using a training log received from server 500, a learning model (second learning model) that learns content of control to be executed by each of IoT devices 400 and 410, time at which the control is to be executed, etc. For example, specific trainer 160 trains, using a control log as an input, the learning model to output the degree of anomaly in the control log.

A training log is, for example, a control log of each of IoT devices 400 and 410. IoT devices 400 and 410 regularly transmit, for example, the control logs to server 500. Additionally, server 500 regularly transmits, as training logs, the control logs received to GW device 100.

It should be noted that timing and a frequency at which IoT devices 400 and 410 transmit control logs to server 500 as well as timing and a frequency at which server 500 transmits the control logs as training logs to GW device 100 may be separately determined in any manner.

In addition, specific trainer 160 may perform training at any timing.

Although the second learning model is, for example, a machine learning model that uses a neural network (e.g., a convolutional neural network) such as deep learning, the second learning model may be another machine learning model.

FIG. 7 is a table showing an example of a specific training result according to the embodiment.

A specific training result includes, for example, src_ip, dst_ip, protocol, and value_range.

value_range is information that indicates score corresponding to object, property, and value. In the example shown in FIG. 7, when object, property, and value indicate 0x30, 0xB3, and 18 to 25, respectively, score is 10. Moreover, when object, property, and value indicate 0x30, 0xB3, and at least 30, respectively, score is 80. Furthermore, when object, property, and value indicate 0x30, 0xB0, and 1, respectively, score is 10. Moreover, when object, property, and value indicate 0x30, 0xB0, and 2, respectively, score is 10.

Furthermore, when object, property, and value indicate 0x30, 0xB0, and 3, respectively, score is 60.

For example, when score is high, specific anomaly determiner 170 identifies an anomaly. For example, a threshold value of score is predetermined in any manner. For example, when score is higher than or equal to the threshold value, a control log that includes src_ip, dst_ip, protocol, and value_range including object, property, and value is determined as anomalous. In contrast, for example, when score is less than the threshold value, the control log that includes src_ip, dst_ip, protocol, and value_range including object, property, and value is determined as normal.

Specific trainer 160 provides a specific training result that is information as shown in FIG. 7, based on a training log, and stores the specific training result provided into training result storage 190.

It should be noted that a threshold value used when simple anomaly determiner 130 identifies an anomaly and a threshold value used when specific anomaly determiner 170 identifies an anomaly may be the same or different from each other.

Specific anomaly determiner 170 is a processing unit that detects an anomaly in a control log received by log receiver 150. Instruction transmitter 140, log receiver 150, and specific anomaly determiner 170 are an example of a second detector.

For example, specific anomaly determiner 170 determines whether a control log is anomalous, using the above-described second learning model (i.e., a specific training result).

As stated above, for example, simple anomaly determiner 130 detects an anomaly in communication information. Specifically, simple anomaly determiner 130 detects, for example, an anomaly in first information such as src_ip, dst_ip, and protocol included in the communication information. In contrast, specific anomaly determiner 170 detects, for example, an anomaly, based on a control log that includes first information and second information such as object, property, and value. In this manner, for example, the amount of information (a data amount used when the anomaly is detected) of the control log is greater than the amount of information of the first information included in the communication information.

By detecting an anomaly in those information items, GW device 100 detects the anomaly in network 600.

Outputter 180 is a processing unit that notifies, when specific anomaly determiner 170 detects an anomaly, the anomaly. Outputter 180 is an example of a notifier.

For example, by transmitting, to a notification device such as a smartphone, a PC, a display, or a loudspeaker used by the user, or server 500, detection information for notifying the user of the anomaly, outputter 180 notifies the user of the anomaly.

It is desirable that detection information be information for notifying the user of an anomaly, or detection information may be image information, audio information, or information for executing another notification method.

The processing units such as communication receiver 110, simple trainer 120, simple anomaly determiner 130, instruction transmitter 140, log receiver 150, specific trainer 160, specific anomaly determiner 170, and outputter 180 are each achieved by, for example, a memory and a processor such as a central processing unit (CPU) that executes control programs stored in the memory. The memory included in each of the processing units may be achieved by a shared memory or one or more memories independent of each other. Additionally, the processor included in the processing unit may be achieved by a shared processor or one or more processors independent of each other.

Training result storage 190 is a storage device that stores training results of simple trainer 120 and specific trainer 160. In addition, for example, training result storage 190 stores learning models trained by simple trainer 120 and specific trainer 160.

Predefined information storage 200 is a storage device that stores predefined information.

Training result storage 190 and predefined information storage 200 are each achieved by, for example, a storage device such as a semiconductor memory or a hard disc drive (HDD). It should be noted that training result storage 190 and predefined information storage 200 may be each achieved by a shared storage device or one or more storage devices independent of each other. In addition, the one or more storage devices may store control programs executed by the respective processing units. In this case, each of the processing units need not include a memory.

Each of IoT devices 400 and 410 is a device that is mutually communicable with each of the devices included in communication system 10 via network 600.

For example, each of IoT devices 400 and 410 is achieved by a communication interface for communicating with each of the devices included in communication system 10, a non-volatile memory in which programs are stored, a volatile memory that is a temporary storage area for executing programs, an input-output port for transmitting and receiving signals, or a processor that executes programs. The communication interface is achieved by, for example, an antenna and a wireless communication circuit to enable wireless communication. Each of IoT devices 400 and 410 may include a communication interface such as a connector to which a communication line for communicating with server 500 is connected.

Server 500 is a device that is mutually communicable with each of the devices included in communication system 10. It should be noted that server 500 may communicate with the device included in communication system 10 via network 600 or may communicate with the device included in communication system 10 not via network 600 but via a network such as the Internet.

For example, server 500 is achieved by a communication interface for communicating with each of the devices included in communication system 10, a non-volatile memory in which programs are stored, a volatile memory that is a temporary storage area for executing programs, an input-output port for transmitting and receiving signals, or a processor that executes programs. The communication interface may be achieved by, for example, an antenna and a wireless communication circuit to enable wireless communication, or a connector to which a communication line is connected.

### [Specific Examples]

Next, specific examples of anomaly detection processing performed by GW device 100 are described.

FIG. 8 is a table showing a specific example of communication information according to the embodiment. Specifically, FIG. 8 shows communication information intercepted by GW device 100.

For example, it is assumed that IoT device 410 transmits to IoT device 400 the communication information shown in FIG. 8 that is information for controlling IoT device 400. GW device 100 obtains the information by intercepting the information, and detects an anomaly in the information obtained.

As shown in FIG. 8, the communication information includes, for example, timestamp, src_ip, dst_ip, protocol, object, property, and attribute.

timestamp is information that indicates time at which IoT device 410 transmitted the communication information to IoT device 400.

src_ip is information that indicates an IP address of IoT device 410.

dst_ip is information that indicates an IP address of IoT device 400.

protocol is information that indicates communication standards for communication between IoT device 400 and IoT device 410.

object is information that indicates a type of IoT device 400.

property is information that indicates content of control that IoT device 400 is caused to execute.

attribute is information that indicates processing corresponding to the content of the control indicated by property. attribute is an example of the second information.

Here, as shown in FIG. 6, object and property indicate, for example, 0x30 and 0xB3, respectively. In addition, attribute indicates, for example, an instruction for requesting information that indicates current value of the content of the control indicated by property, such as GET.

However, for example, those information items are encrypted in the communication information transmitted from IoT device 410 to IoT device 400, and are thus unreadable by GW device 100.

For example, when IoT device 410 conducts on IoT device 400 a cyber attack such as an attack to read a set value, since attribute is set to GET but is encrypted, attribute is unreadable by GW device 100.

In view of this, GW device 100 detects an anomaly in readable unencrypted information (first information) in the communication information. For example, GW device 100 determines the degree of anomaly (score) of the communication information as 80, using a simple training result. Moreover, for example, a threshold value is predetermined as 60, and GW device 100 compares the degree of anomaly determined and the threshold value. In this example, GW device 100 determines that the communication information is anomalous. GW device 100 transmits warning transmission information to IoT device 400 and IoT device 410.

GW device 100 switches to a specific detection mode in which specific anomaly determiner 170 detects an anomaly. In addition, IoT device 400 and IoT device 410 switch to the warning mode.

FIG. 9 is a table showing a specific example of a control log according to the embodiment. Specifically, FIG. 9 shows information that indicates a control log transmitted from at least one of IoT device 400 or IoT device 410.

As shown in FIG. 9, the control log includes, for example, timestamp, src_ip, dst_ip, protocol, object, property, attribute, and value.

SET indicated by attribute indicates an instruction for setting content of control indicated by property to a value indicated by value.

For example, when IoT device 410 conducts on IoT device 400 a cyber attack such as an attack to rewrite a set value, attribute is set to SET.

Unlike the communication information shown in FIG. 8, object, property, attribute, and value are unencrypted in the control log shown in FIG. 9. In other words, at least one of IoT device 400 or IoT device 410 transmits those information items to GW device 100 without encrypting the information items.

In this manner, GW device 100 detects an anomaly in the control log (in this example, the first information and the second information).

It should be noted that, as stated above, the information items transmitted from at least one of IoT device 400 or IoT device 410 to GW device 100 may be encrypted.

For example, GW device 100 determines the degree of anomaly (score) of the communication information as 80, using a specific training result. Moreover, for example, a threshold value is predetermined as 60, and GW device 100 compares the degree of anomaly determined and the threshold value. In this example, GW device 100 determines that the control log is anomalous. GW device 100 outputs detection information for notifying the user of the anomaly. In this manner, the anomaly detected by GW device 100 is notified to the user.

### [Procedure]

Next, a procedure performed by GW device 100 and IoT device 400 is described. It should be noted that IoT device 410 executes substantially the same processing as IoT device 400.

FIG. 10 is a flow chart illustrating a procedure performed by GW device 100 according to the embodiment. It should be noted that the following description is based on the premise that, at the beginning of the flow chart in FIG. 10, an anomaly in communication information is not detected, and GW device 100 is in a simple detection mode in which an anomaly in a control log is not detected.

First, GW device 100 detects an anomaly in communication information (simple detection processing) (S110). A specific procedure of the simple detection processing is described later.

Next, simple anomaly determiner 130 determines whether the anomaly is in the communication information (simple detection is present), based on a result of the simple detection processing performed in step S110 (S120).

When simple anomaly determiner 130 determines that the anomaly is not in the communication information (No in S120), simple anomaly determiner 130 returns processing to step S110.

In contrast, when simple anomaly determiner 130 determines that the anomaly is in the communication information (Yes in S120), instruction transmitter 140 obtains device information for communicating with each of the plurality of devices included in communication system 10, such as an IP address of the device (S130).

Then, instruction transmitter 140 transmits warning transmission information to the plurality of devices (S140).

It should be noted that, in step S130 and step S140, instruction transmitter 140 may obtain device information about, among the plurality of devices, each of a device that has received the communication information in which the anomaly is detected in step S110 and a device that has transmitted the communication information, and transmit warning transmission information to the device. Additionally, in step S130 and step S140, instruction transmitter 140 may obtain device information about a plurality of devices in the same network, and transmit warning transmission information to the plurality of devices.

After that, GW device 100 switches to a specific detection mode in which specific anomaly determiner 170 detects an anomaly in a control log (S150).

Next, GW device 100 detects an anomaly in a control log (specific detection processing) (S160). A specific procedure of the specific detection processing is described later.

Then, specific anomaly determiner 170 determines whether the anomaly is in the control log (specific detection is present), based on a result of the specific detection processing performed in step S160 (S170).

When specific anomaly determiner 170 determines that the anomaly is in the control log (Yes in S170), outputter 180 outputs detection information (S180).

After that, GW device 100 switches to the simple detection mode (S190) and returns the processing to S110.

In contrast, when specific anomaly determiner 170 determines that the anomaly is not in the control log (No in S170), specific anomaly determiner 170 determines whether a cancellation condition for a warning mode is satisfied. In this example, specific anomaly determiner 170 determines whether a predetermined time has passed since GW device 100 switched to the specific detection mode, that is, the anomaly in the communication was detected in step S120 (S200).

When specific anomaly determiner 170 determines that the predetermined time has not passed (No in S200), specific anomaly determiner 170 returns the processing to S160 and performs the specific detection processing on a control log different from the control log on which the specific detection processing has previously been performed.

In contrast, when specific anomaly determiner 170 determines that the predetermined time has passed (Yes in S200), specific anomaly determiner 170 moves the processing to S190.

It should be noted that the processing may be moved to step S200 after step S180.

In addition, GW device 100 may perform the simple detection processing while GW device 100 is in the specific detection mode.

FIG. 11 is a flow chart illustrating a procedure for performing the simple detection processing according to the embodiment. Specifically, FIG. 11 is a flow chart illustrating the details of step S110 and step S120 shown in FIG. 10.

First, simple anomaly determiner 130 obtains communication information in communication performed between the plurality of devices included in communication system 10 via network 600 (S210). In other words, simple anomaly determiner 130 obtains the communication information that flows in network 600. Specifically, communication receiver 110 intercepts the communication information flowing in network 600, and outputs the communication information intercepted to simple anomaly determiner 130. In this manner, simple anomaly determiner 130 obtains the communication information.

Next, simple anomaly determiner 130 extracts information of a header portion in the communication information (S220). The information of the header portion is, for example, information such as at least one of above-described timestamp, src_ip, dst_ip, or protocol.

Then, simple anomaly determiner 130 checks the information of the header portion against predefined information (S230).

In this manner, simple anomaly determiner 130 determines whether an anomaly is in the information of the header portion (S240).

When simple anomaly determiner 130 determines that the anomaly is in the information of the header portion (Yes in S240), simple anomaly determiner 130 moves processing to step S130 shown in FIG. 10 (S280).

In contrast, when simple anomaly determiner 130 determines that the anomaly is not in the information of the header portion (No in S240), simple anomaly determiner 130 obtains a simple training result from simple trainer 120 or training result storage 190 (S250).

After that, simple anomaly determiner 130 checks the information of the header portion against the simple training result (S260).

In this manner, simple anomaly determiner 130 determines whether the anomaly is in the information of the header portion (S270).

When simple anomaly determiner 130 determines that the anomaly is in the information of the header portion (Yes in S270), simple anomaly determiner 130 moves the processing to step S130 shown in FIG. 10 (S280).

In contrast, when simple anomaly determiner 130 determines that the anomaly is not in the information of the header portion (No in S270), simple anomaly determiner 130 ends the processing. For example, simple anomaly determiner 130 returns the processing to step S110 (i.e., step S210) shown in FIG. 10.

FIG. 12 is a flow chart illustrating a procedure performed by IoT device 400 according to the embodiment. It should be noted that the following description is based on the premise that IoT device 400 is in the normal mode at the beginning of the flow chart shown in FIG. 12.

First, IoT device 400 determines whether IoT device 400 has received a flag (S310). For example, IoT device 400 determines whether IoT device 400 has received warning transmission information. In addition, when IoT device 400 receives the warning transmission information, IoT device 400 determines whether the warning transmission information includes a flag (e.g., whether warning_flag is True).

When IoT device 400 determines that IoT device 400 has not received the flag (No in S310), IoT device 400 returns processing to step S310.

When IoT device 400 determines that IoT device 400 has received the flag (Yes in S310), IoT device 400 switches to the warning mode (S320).

Next, IoT device 400 determines whether IoT device 400 has received, for example, a control instruction that is included in the warning transmission information and is for causing control to be executed, from a device that has transmitted or received communication information in which an anomaly is detected in the simple detection processing.

When IoT device 400 determines that IoT device 400 has received the control instruction (Yes in S330), IoT device 400 extracts, from a storage device included in IoT device 400, a control log that indicates content of processing performed based on the control instruction (S340).

Then, IoT device 400 transmits the control log extracted to GW device 100 (S350).

After step S350 or when IoT device 400 determines that IoT device 400 has not received the control instruction (No in S330), IoT device 400 determines whether IoT device 400 satisfies a cancellation condition that is a condition for cancelling the warning mode (i.e., condition for switching to the normal mode) (S360). For example, IoT device 400 determines whether the current time is after time indicated by cancellation_condition included in the warning transmission information. IoT device 400 may include a timer such as a real-time clock (RTC) for measuring time.

When IoT device 400 determines that IoT device 400 satisfies the cancellation condition (Yes in S360), IoT device 400 cancels the warning mode and switches to the normal mode (S370), and returns the processing to step S310.

In contrast, when IoT device 400 determines that IoT device 400 does not satisfy the cancellation condition (No in S360), IoT device 400 returns the processing to step S330.

FIG. 13 is a flow chart illustrating a procedure for performing the specific detection processing according to the embodiment.

Specifically, FIG. 13 is a flow chart illustrating the details of step S160 and step S170 shown in FIG. 10.

First, specific anomaly determiner 170 determines whether specific anomaly determiner 170 has received a control log (S410). Specifically, specific anomaly determiner 170 determines whether log receiver 150 has received, from a device to which instruction transmitter 140 had transmitted warning transmission information, a control log of the device.

When specific anomaly determiner 170 determines that specific anomaly determiner 170 has not received the control log (No in S410), specific anomaly determiner 170 moves processing to step S200 shown in FIG. 10 (S460).

In contrast, when specific anomaly determiner 170 determines that specific anomaly determiner 170 has received the control log (Yes in S410), specific anomaly determiner 170 obtains a specific training result from specific trainer 160 or training result storage 190 (S420).

Next, specific anomaly determiner 170 checks the control log against the specific training result (S430).

In this manner, specific anomaly determiner 170 determines whether an anomaly is in the control log (S440).

When specific anomaly determiner 170 determines that the anomaly is in the control log (Yes in S440), specific anomaly determiner 170 moves the processing to step S180 shown in FIG. 10 (S450).

In contrast, when specific anomaly determiner 170 determines that the anomaly is not in the control log (No in S440), specific anomaly determiner 170 moves the processing to step S200 shown in FIG. 10 (S460).

### [Summary]

FIG. 14 is a sequence diagram for illustrating a procedure performed by communication system 10 according to the embodiment.

First, it is assumed that IoT device 410 transmits first control information to IoT device 400 (S510). The first control information is, for example, communication information that is transmitted and received in communication between the plurality of devices in network 600.

IoT device 400 receives the first control information transmitted from IoT device 410 (S520). For example, IoT device 400 performs processing based on the first control information received.

Moreover, GW device 100 receives the first control information transmitted from IoT device 410 to IoT device 400 (S530). Specifically, for example, GW device 100 obtains the first control information flowing in network 600, by intercepting the first control information.

Next, GW device 100 detects an anomaly in the first control information received (S540). In this manner, GW device 100 determines whether the anomaly is in the first control information received (S550). By performing step S530 to step S550, GW device 100 detects the anomaly in the first control information flowing in network 600.

When GW device 100 determines that the anomaly is not in the first control information received (No in S550), GW device 100 obtains the first control information by intercepting new first control information that flows in network 600, and detects an anomaly in the first control information obtained.

In contrast, when GW device 100 determines that the anomaly is in the first control information received, that is, detects the anomaly in the first control information received (Yes in S550), GW device 100 transmits, to the plurality of devices, a first instruction for causing transmission of second control information that indicates content of control executed by, among the plurality of devices, a device that has transmitted the second control information (S560). In this example, GW device 100 transmits the first instruction to IoT device 400 and IoT device 410. The first instruction is, for example, a flag included in warning transmission information. In this manner, GW device 100 causes IoT device 400 and IoT device 410 to transmit the second control information. The second control information is, for example, a control log such as a control value.

IoT device 410 receives the first instruction (S570).

Likewise, IoT device 400 receives the first instruction (S580).

Since IoT device 400 has received the first control information, IoT device 400 transmits the second control information to GW device 100 (S590).

It should be noted that IoT device 410 that has transmitted the first control information may also transmit the second control information to GW device 100.

GW device 100 receives the second control information from IoT device 400 (S600).

Then, GW device 100 detects an anomaly in the second control information received (S610). In this manner, GW device 100 determines whether the anomaly is in the second control information received (S620).

As stated above, when GW device 100 detects the anomaly in step S550, GW device 100 transmits, to the plurality of devices, the first instruction for causing the transmission of the second control information indicating the content of the control executed by, among the plurality of devices, the device that has transmitted the second control information, and detects the anomaly in the second control information received. For example, when GW device 100 determines that an anomaly is in the first control information, GW device 100 obtains the second control information and determines whether an anomaly is in the second control information obtained.

When GW device 100 determines that the anomaly is not in the second control information received (No in S620), GW device 100 detects an anomaly in second control information newly received. Alternatively, when GW device 100 satisfies the cancellation condition for the warning mode, GW device 100 obtains the first control information by intercepting new first control information flowing in network 600, and detects an anomaly in the first control information obtained.

In contrast, when GW device 100 determines that the anomaly is in the first control information received, that is, detects the anomaly in the second control information received (Yes in S620), for example, GW device 100 causes a display device, such as a smartphone or a display of the user, or an audio device, such as a loudspeaker that outputs a sound, to notify the occurrence of the anomaly in network 600 (S630). In this manner, for example, when GW device 100 determines that an anomaly is in the second control information, GW device 100 determines that the anomaly has occurred in network 600 (specifically, a device that has transmitted or received the first control information determined as anomalous or a device that has transmitted the second control information determined as anomalous), and notifies the user of the anomaly.

### [Advantageous Effects etc.]

Hereinafter, techniques obtained from the disclosure of the Description are exemplified, and advantageous effects etc. obtained from the techniques exemplified are explained.

Technique 1 is directed to an anomaly detection method to be executed by an anomaly detection device communicable with a plurality of devices that are communicable with each other via a predetermined network, and the anomaly detection method includes: a first detection step (e.g., S530 to S550) of detecting an anomaly in first control information that flows in the predetermined network; and a second detection step (e.g., S560 to S620) of transmitting, to the plurality of devices, a first instruction for causing transmission of second control information, and detecting an anomaly in the second control information received, when the anomaly is detected in the first detection step (e.g., Yes in S550), the second control information indicating content of control executed by, among the plurality of devices, a device that has transmitted the second control information.

The anomaly detection device is, for example, GW device 100. The predetermined network is, for example, network 600. The plurality of devices are, for example, IoT devices 400 and 410 (specifically, smart speaker 300, PC 310, smartphone 320, refrigerator 330, air-conditioning device 340, smart key 350, etc.). The first detection step is performed by, for example, a first detector such as a processor. The first detector is, for example, simple anomaly determiner 130. Moreover, the second detection step is performed by, for example, a second detector such as a processor. The second detector is, for example, instruction transmitter 140, log receiver 150, and specific anomaly determiner 170.

For example, constantly receiving information such as a control log from each device in a network and detecting an anomaly make it easy to more surely detect an anomaly in the network. However, such a method requires a lot of resources such as the processing capacity of a processor and the capacity of a memory that are necessary for detecting an anomaly. For example, when household electrical appliances communicate with each other using a premises network etc., it is assumed that the communication between the household electrical appliances is closed to the premises network. For this reason, to detect a cyber attack such as fraudulent control in the premises network early, devices connected to the premises network need perform the detection. However, when an anomaly such as the above-described attack in the premises network is detected, resources may become insufficient to execute anomaly detection processing such as evaluating the validity of all communication in the premises network. Moreover, since it is assumed that, even when communication between household electrical appliances is intercepted, part of information in the communication is encrypted, it is assumed that a device other than the household electrical appliances having performed the communication is unable to know the content of the communication. Furthermore, there is, for example, a concern that resources become insufficient to decode all communication encrypted.

In view of the above, in the anomaly detection method according to Technique 1, first, the first control information such as communication information transmitted and received between the plurality of devices in the predetermined network is received (intercepted), and an anomaly is detected using readable information included in first information, for example, unencrypted information. Here, supposing that an anomaly is detected, that is, when information in which an anomaly is assumed to have occurred is detected, the second control information such as a control log is received from a device, and whether the anomaly has occurred is specifically detected using the second control information. In this manner, when it is assumed that the anomaly has not occurred, the anomaly is detected using a relatively small amount of information; and when the anomaly is detected, the anomaly is further detected using a relatively large amount of information. In other words, in the anomaly detection method, for example, simple detection at an IP level is performed as primary filtering, and when an anomaly is detected in the simple detection, specific secondary detection such as fully examining even the content of a log is performed. For example, in the anomaly detection method, transmission of log information such as a control instruction from a device relating to a device in which an anomaly is detected in the simple detection is instructed, and the specific secondary detection is performed based on the log information.

Accordingly, it is possible to accurately detect an anomaly in a network while reducing the amount of processing for detecting the anomaly.

Technique 2 is directed to the anomaly detection method according to Technique 1, in which, in the second detection step, when the anomaly is detected in the first detection step, the first instruction is transmitted to each of a first device and a second device among the plurality of devices, the first device having received the first control information in which the anomaly is detected in the first detection step, the second device having transmitted the first control information in which the anomaly is detected in the first detection step.

Accordingly, the content of the control executed by the device likely relating especially to the anomaly detected is used to detect the anomaly in the second detection step. For this reason, it is possible to appropriately detect the anomaly in the predetermined network.

Technique 3 is directed to the anomaly detection method according to Technique 2, in which the second detection step includes transmitting, to each of the first device and the second device, a second instruction for stopping the transmission of the second control information.

The second instruction is, for example, a cancellation instruction included in warning transmission information.

Accordingly, for example, when the anomaly detected is resolved, it is possible to reduce the unnecessary transmission of the second control information from the device.

Technique 4 is directed to the anomaly detection method according to Technique 3, in which the second instruction includes time information that indicates time at which the transmission of the second control information is to be stopped.

For example, when an anomaly is not detected in the second detection step although an anomaly is detected in the first detection step, especially problematic anomalies are highly unlikely to have occurred in the plurality of devices. In such a case, although an anomaly is detected after the second control information is repeatedly received from each device for a long time, an anomaly is highly unlikely to be detected. In view of this, when an anomaly is not detected for a predetermined time, the second instruction for stopping the transmission of the second control information is transmitted in the second detection step. Accordingly, the simple process makes it possible to reduce the unnecessary transmission of the second control information from the device.

Technique 5 is directed to the anomaly detection method according to any one of Technique 1 to Technique 4 further includes: a notification step (e.g., S630) of notifying, when the anomaly is detected in the second detection step, the anomaly.

The notification step is performed by, for example, a notifier such as a processor. The notifier is, for example, outputter 180.

Accordingly, it is possible to help the user become aware of the anomaly easily.

Technique 6 is directed to the anomaly detection method according to any one of Technique 1 to Technique 5, in which in the first detection step, an anomaly in first information included in the first control information is detected, and an amount of information of the second control information is greater than an amount of information of the first information.

The first information is, for example, information of a header portion included in communication information.

Accordingly, when it is assumed that an anomaly has not occurred, the anomaly is detected using a relatively small amount of information; and when an anomaly is detected, the anomaly is further detected using a relatively large amount of information. For this reason, since it is possible to detect an anomaly in the network without using all sorts of information about the plurality of devices to detect an anomaly, it is possible to further accurately detect an anomaly in the predetermined network while further reducing the amount of processing for detecting the anomaly.

Technique 7 is directed to the anomaly detection method according to Technique 6, in which the first information included in the first control information is not encrypted.

Accordingly, it is possible to detect the anomaly without using information such as an encryption key in the first detection step.

Technique 8 is directed to the anomaly detection method according to Technique 6 or Technique 7, in which the first control information includes second information that is encrypted, and the second control information includes the second information that is not encrypted.

In other words, the first information is, for example, unencrypted information, such as an IP address, included in communication information. In contrast, the second information is, for example, information that is included in communication information and indicates a control value etc. for controlling a device.

Information for controlling a device such as a control value is often encrypted and transmitted and received. Moreover, it is assumed that encrypted information is often important information. In view of this, when an anomaly is detected in the second detection step, the anomaly is detected using the second information that is highly likely to be such important information. Accordingly, it is possible to further accurately detect an anomaly.

Technique 9 is directed to an anomaly detection device communicable with a plurality of devices that are communicable with each other via a predetermined network, and the anomaly detection device includes: a first detector that detects an anomaly in first control information that flows in the predetermined network; and a second detector that transmits, to the plurality of devices, a first instruction for causing transmission of second control information, and detects an anomaly in the second control information received, when the first detector detects the anomaly, the second control information indicating content of control executed by, among the plurality of devices, a device that has transmitted the second control information.

Accordingly, it is possible to produce the same advantageous effects as the anomaly detection method according to one aspect of the present disclosure.

Technique 10 is directed to a program for causing a computer to execute the anomaly detection method according to any one of Technique 1 to Technique 8.

Accordingly, it is possible to produce the same advantageous effects as the anomaly detection method according to one aspect of the present disclosure.

### [Other Embodiments]

Although the embodiment is described above, the present disclosure is not limited to the above-described embodiment.

For example, although GW device 100 serves as an anomaly detection device in the above-described embodiment, any devices of communication system 10 may detect an anomaly. Moreover, for example, the first detector and the second detector may be disposed in different devices. Furthermore, for example, the first detector may be disposed in a device in a local network such as a house, and the second detector may be disposed in a server communicable with devices in the local network via the Internet.

In addition, for example, machine learning may be executed by a device other than the anomaly detection device, and simple training results and specific training results may be stored in training result storage 190 in advance. In this case, the anomaly detection device need not include simple trainer 120 and specific trainer 160.

Moreover, communication system 10 may include server 500 or need not include server 500.

Furthermore, the anomaly detection device described in the above-described embodiment may be achieved as one device including all the constituent elements, or may be achieved by assigning each of functions to a corresponding one of a plurality of devices and coordinating the plurality of devices.

In addition, in the above-described embodiment, processing executed by a specific processing unit may be executed by another processing unit. Moreover, the order of a plurality of processing steps may be changed, or the plurality of processing steps may be executed in parallel.

Furthermore, in the above-described embodiment, each of the constituent elements may be realized by executing a software program suitable for the constituent element. Each constituent element may be realized by means of a program executing unit, such as a central processing unit (CPU) or a processor, reading and executing a software program recorded on a recording medium such as a hard disk or semiconductor memory.

Additionally, each constituent element may be realized by hardware. For example, the constituent element may be a circuit (or an integrated circuit). These circuits may be consolidated as a single circuit and, alternatively, may be individual circuits. In addition, these circuits may be ordinary circuits and, alternatively, may be specialized circuits.

Moreover, the general or specific aspects of the present disclosure may be realized as a device, a system, a method, an integrated circuit, a computer program, or a computer-readable non-transitory recording medium such as a CD-ROM. Additionally, the general or specific aspects of the present disclosure may be realized as any combination of a device, a system, a method, an integrated circuit, a computer program, or a recording medium.

Forms obtained by various modifications to the embodiment that can be conceived by a person skilled in the art as well as forms realized by arbitrarily combining the constituent elements and the functions in the embodiment are included in the scope of the present disclosure, as long as they do not depart from the essence of the present disclosure.

### [Industrial Applicability]

The present disclosure is useful for IoT devices.

### [Reference Signs List]

- 10: communication system
- 100: GW device
- 110: communication receiver
- 120: simple trainer
- 130: simple anomaly determiner
- 140: instruction transmitter
- 150: log receiver
- 160: specific trainer
- 170: specific anomaly determiner
- 180: outputter
- 190: training result storage
- 200: predefined information storage
- 300: smart speaker
- 310: PC
- 320: smartphone
- 330: refrigerator
- 340: air-conditioning device
- 350: smart key
- 400,: 410 IoT device
- 500: server
- 600: network

## Claims

1. An anomaly detection method to be executed by an anomaly detection device communicable with a plurality of devices that are communicable with each other via a predetermined network, the anomaly detection method comprising:
a first detection step of detecting an anomaly in first control information that flows in the predetermined network; and
a second detection step of transmitting, to the plurality of devices, a first instruction for causing transmission of second control information, and detecting an anomaly in the second control information received, when the anomaly is detected in the first detection step, the second control information indicating content of control executed by, among the plurality of devices, a device that has transmitted the second control information.

2. The anomaly detection method according to claim 1,
wherein in the second detection step, when the anomaly is detected in the first detection step, the first instruction is transmitted to each of a first device and a second device among the plurality of devices, the first device having received the first control information in which the anomaly is detected in the first detection step, the second device having transmitted the first control information in which the anomaly is detected in the first detection step.

3. The anomaly detection method according to claim 2,
wherein the second detection step includes transmitting, to each of the first device and the second device, a second instruction for stopping the transmission of the second control information.

4. The anomaly detection method according to claim 3,
wherein the second instruction includes time information that indicates time at which the transmission of the second control information is to be stopped.

5. The anomaly detection method according to claim 1, further comprising:
a notification step of notifying, when the anomaly is detected in the second detection step, the anomaly.

6. The anomaly detection method according to claim 1,
wherein in the first detection step, an anomaly in first information included in the first control information is detected, and
an amount of information of the second control information is greater than an amount of information of the first information.

7. The anomaly detection method according to claim 6,
wherein the first information included in the first control information is not encrypted.

8. The anomaly detection method according to claim 6,
wherein the first control information includes second information that is encrypted, and
the second control information includes the second information that is not encrypted.

9. An anomaly detection device communicable with a plurality of devices that are communicable with each other via a predetermined network, the anomaly detection device comprising:
a first detector that detects an anomaly in first control information that flows in the predetermined network; and
a second detector that transmits, to the plurality of devices, a first instruction for causing transmission of second control information, and detects an anomaly in the second control information received, when the first detector detects the anomaly, the second control information indicating content of control executed by, among the plurality of devices, a device that has transmitted the second control information.

10. A program for causing a computer to execute the anomaly detection method according to any one of claim 1 to claim 8.
